# EUROPÄISCHE PATENTANMELDUNG

(11) **EP 2 767 645 A1**
(43) Veröffentlichungstag der Anmeldung: **20.08.2014**
(21) Anmeldenummer: 14155262.0
(22) Anmeldetag: 14.02.2014
(51) Int. Cl.: E04B 2/96

(54) **Befestigungsvorrichtung für eine Vorhangfassadenwand**

(30) Priorität: 15.02.2013 EP 13155420
(71) Anmelder: Alcoa Aluminium Deutschland, Inc., 58642 Iserlohn (DE)
(72) Erfinder: Dobigny, Grégoire, 68540 Bollwiller (FR)
(74) Vertreter: Trinks, Ole

(57) **Zusammenfassung**

Es wird eine Befestigungsvorrichtung für eine Vorhangfassadenwand (90) zum Ineingriffbringen mit einem Verankerungselement (30) angegeben.

Mit dem Ziel, die mechanischen Eigenschaften der Befestigungsvorrichtung zu verbessern, sieht die erfindungsgemäße Lösung vor, dass die Befestigungsvorrichtung ein Stabelement (20) und ein Klauenelement (10) aufweist, wobei das Stabelement (20) zumindest teilweise in das Klauenelement (10) eingeführt oder einführbar ist, wobei die Befestigungsvorrichtung zum Ineingriffbringen mit dem Verankerungselement (30) zumindest teilweise in einem Bereich in das Verankerungselement (30) einführbar ist, in welchen das Stabelement (20) in das Klauenelement (10) eingeführt bzw. einführbar ist, und wobei das Stabelement (20) dazu ausgelegt ist, bei dem Ineingriffbringen der Befestigungsvorrichtung mindestens eine Klaue (11a, 11b) des Klauenelementes (10) in das Verankerungselement (30) einzupressen.

## Beschreibung

Die Erfindung betrifft eine Befestigungsvorrichtung für eine Vorhangfassadenwand, insbesondere für eine Pfosten-Riegel-Anordnung.

Aus dem Stand der Technik sind Befestigungsvorrichtungen für Vorhangfassadenwände bekannt, die dazu dienen, verschiedene Elemente an vorgegebenen Positionen der Vorhangfassadenwand dauerhaft oder lösbar zu befestigen.

Im Allgemeinen weisen hierfür die Vorhangfassadenwände, also insbesondere Pfosten-Riegel-Profilanordnungen, Verankerungselemente wie durchgehende Verankerungskanäle auf, in welche derartige herkömmliche Befestigungsvorrichtungen in der Regel eingeschraubt werden. Die Verankerungskanäle sind hierbei gewöhnlicherweise in Ausdehnungsrichtung des jeweiligen Fassadenelementes, also des Pfostens bzw. des Riegels, durchgehend ausgebildet, sodass die Position einer derartigen herkömmlichen Befestigungsvorrichtung in der Regel entlang dieser durchgehend ausgebildeten Verankerungskanäle weitgehend frei gewählt werden kann.

Die zuvor beschriebenen herkömmlichen Befestigungsvorrichtungen weisen nun unter anderem den Nachteil auf, dass durch die begrenzte Ausdehnungsmöglichkeit der Verankerungskanäle in Richtung der einzubringenden Schraube, d. h. senkrecht zu der Ausdehnungsrichtung des den jeweiligen Verankerungskanal tragenden Fassadenelementes begrenzt ist, sodass das herkömmliche Befestigungsvorrichtungen unter anderen nicht die gewünschte Tragfähigkeit aufweisen, die für ein bestimmtes zu befestigendes Element erforderlich wäre.

Es ist daher die Aufgabe der vorliegenden Erfindung, eine herkömmliche Befestigungsvorrichtung der eingangs genannten Art dahingehend weiterzubilden, dass die mechanischen Eigenschaften verbessert werden.

Die Aufgabe wird gelöst durch die Merkmale des unabhängigen Patentanspruches 1.

Insbesondere wird die Aufgabe dadurch gelöst, dass bei einer Befestigungsvorrichtung für eine Vorhangfassadenwand, die dazu ausgelegt ist, mit einem Verankerungselement, vorzugsweise mit einem an der Vorhangfassadenwand angeordneten Verankerungskanal, in Eingriff gebracht zu werden, diese Befestigungsvorrichtung ein Stabelement und ein Klauenelement aufweist, wobei das Stabelement zumindest teilweise in das Klauenelement eingeführt oder einführbar ist, wobei die Befestigungsvorrichtung zum Ineingriffbringen mit dem Verankerungselement zumindest teilweise in einem Bereich in das Verankerungselement einführbar ist, in welchen das Stabelement in das Klauenelement eingeführt bzw. einführbar ist, und wobei das Stabelement dazu ausgelegt ist, bei dem Ineingriffbringen der Befestigungsvorrichtung mindestens eine Klaue des Klauenelementes in das Verankerungselement, insbesondere in den Verankerungskanal einzupressen.

Die Vorteile der erfindungsgemäßen Lösung liegen auf der Hand.

So ist dadurch, dass die Befestigungsvorrichtung mindestens zweiteilig in Form eines Stabelementes und eines Klauenelementes ausgebildet ist, und dadurch, dass bei dem Ineingriffbringen der Befestigungsvorrichtung mit dem Verankerungselement mindestens eine Klaue des Klauenelementes in das Verankerungselement eingepresst wird, eine gegenüber den herkömmlichen Befestigungsvorrichtungen erhöhte mechanische Belastbarkeit durch die Verzahnung gegeben; gleichzeitig ist durch das Stabelement die mechanische Integrität der gesamten Befestigungsvorrichtung gegenüber den aus dem Stand der Technik bekannten Lösungen erhöht, d. h. trotz der teilweisen Verformung des Klauenelementes während des Ineingriffbringens bleibt die Befestigungsvorrichtung mechanisch belastbar und trägt somit selbst zu der erhöhten Tragfähigkeit bei.

Durch das Einpressen, also das Ausbilden einer entsprechenden Verzahnung zwischen der mindestens einen Klaue des Klauenelementes und dem Verankerungselement kann eine hohe mechanische Stabilität in Bezug auf die Befestigung, d h. das zu befestigende Objekt, erreicht werden.

Vorteilhafte Weiterbildungen der erfindungsgemäßen Lösung sind in den abhängigen Ansprüchen angegeben.

So ist es beispielsweise vorgesehen, dass die Befestigungsvorrichtung einen Führungskanal für eine Befestigungsschraube aufweist.

Hierdurch ist es möglich, eine Andrückrichtung der Befestigungsvorrichtung in Richtung des Verankerungselementes vorzugeben, um eine Andrückrichtung der Befestigungsvorrichtung in Richtung des Verankerungselementes zu definieren. Ein derartiges Anpressen, d. h. ein derartiger Anpressdruck ist vorteilhaft, da hierdurch die mögliche Zugbeanspruchung der an der Vorhangfassadenwand befestigten Befestigungsvorrichtung und damit der damit befestigten Nutzlast erhöht werden kann. Durch das Anpressen wird der Reibungskoeffizient auf der gesamten Länge erhöht.

Des Weiteren kann es vorgesehen sein, dass das Stabelement und/oder das Klauenelement Extrusionsteile sind. Mit anderen Worten, es ist vorgesehen, dass das Stabelement, das Klauenelement oder auch beide Elemente in einer Weiterbildung der Erfindung aus einem Leichtmetall, vorzugsweise aus Aluminium extrudiert sind. Hierdurch ist eine einfache und unaufwendige Herstellung der Befestigungsvorrichtung gewährleistet.

Ferner kann es vorgesehen sein, dass das Einpressen bezogen auf den Verankerungskanal in Radialrichtung erfolgt. Bei einer Schraubverbindung erfolgt also das Einpressen dann bezogen auf die Andrückrichtung bzw. Anpressrichtung radial senkrecht dazu. Hierdurch ist dann gewährleistet, dass der Einpressvorgang in das Verankerungselement gleichmäßig erfolgt und somit auch eine gleichmäßige Lastverteilung gewährleistet ist.

Weiter kann es vorgesehen sein, dass mindestens eine Klaue des Klauenelementes dazu ausgelegt ist, in Radialrichtung zu expandieren. Durch diesen spezifischen Einpressvorgang in Radialrichtung durch die mindestens eine Klaue des Klauenelements und die sich daraus ergebende Verzahnungswirkung im Verankerungselement ist die Befestigungswirkung abermals verbessert.

Außerdem kann es vorgesehen sein, dass das Stabelement einen ersten Anschlag und einen zweiten Anschlag aufweist, wobei das Stabelement dazu ausgelegt ist, während des Ineingriffbringens derart durch Verschieben der Anschläge zueinander in Axialrichtung gestaucht zu werden, dass die mindestens eine Klaue des Klauenelementes expandiert. Mit anderen Worten, die Anschläge des Stabelementes werden derart angeordnet, dass ein Stauchen in axialer Richtung des Stabelementes erfolgt. Insbesondere wird ein Stauchvorgang zwischen einer Innenseite des Verankerungselementes, gegen welchen der erste Anschlag des Stabelementes gedrückt wird, und einer weiteren Anschlagfläche wie beispielsweise der Schraubenspitze, gegen welche der zweite Anschlag gedrückt wird, stattfinden. Durch eine derart spezifische Abfolge des Einpressvorganges ist eine gleichmäßige Verzahnung des Klauenelementes in dem Verankerungselement gewährleistet, was die Sicherheit und Stabilität verbessert.

Im Folgenden werden Ausführungsbeispiele der erfindungsgemäßen Lösung anhand einer Zeichnung näher erläutert.

Es zeigen:
- Fig. 1:: eine seitliche schematische Schnittansicht aus einer Befestigungsvorrichtung gemäß einem ersten Ausführungsbeispiel der Erfindung, mit einem nicht in ein Klauenelement eingeführtes Stabelement;
- Fig.2:: die Befestigungsvorrichtung gemäß dem ersten Ausführungsbeispiel aus Fig. 1, wobei das Stabelement in das Klauenelement teilweise eingeführt ist;
- Fig.3:: die Befestigungsvorrichtung aus den Figuren 1 und 2 gemäß dem ersten Ausführungsbeispiel der Erfindung gegenüber einem Verankerungskanal einer Vorhangwand;
- Fig. 4:: die Befestigungsvorrichtung und das Verankerungselement aus Fig. 3 nach einem erfolgten Einpressvorgang mittels einer Schraube;
- Fig. 5:: einer Anordnung ähnlich Fig. 3, mit einer Befestigungsvorrichtung gemäß einem zweiten Ausführungsbeispiel der Erfindung;
- Fig. 6:: in schematischer Schnittansicht die Befestigungsvorrichtung gemäß dem zweiten Ausführungsbeispiel mit einem teilweise in ein Klauenelement eingeführtem Stabelement;
- Fig. 7:: die Befestigungsvorrichtung gemäß dem zweiten Ausführungsbeispiel aus Fig. 6, nach erfolgter Verschiebung des Klauenelementes relativ zum Stabelement;
- Fig. 8:: die Darstellung aus Fig. 7, nach einem teilweisen Einpressvorgang in ein Verankerungselement;
- Fig. 9:: die Darstellung aus Fig. 8, vor einem Einpressvorgang;
- Fig. 10:: die Befestigungsvorrichtung gemäß dem zweiten Ausführungsbeispiel nach vollständigem Einpressvorgang gegenüber einer Vorhangfassadenwand; und
- Fig. 11:: die Darstellung aus Fig. 10, mit zusätzlichen Andrückschrauben an der Befestigungsvorrichtung gemäß dem zweiten Ausführungsbeispiel.

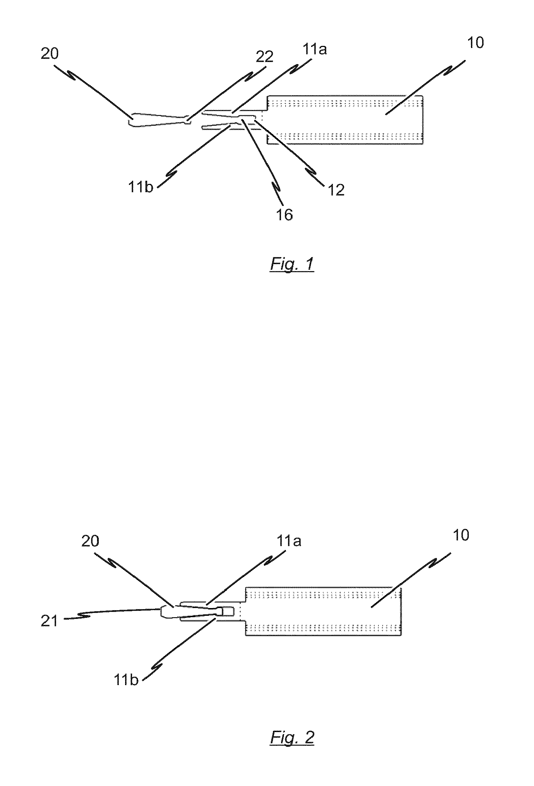

Fig. 1 zeigt eine schematische Schnittansicht auf eine erfindungsgemäße Befestigungsvorrichtung gemäß einem ersten Ausführungsbeispiel der Erfindung, wobei die Befestigungsvorrichtung ein Klauenelement 10 und ein Stabelement 20 aufweist, wobei in der Darstellung gemäß Fig. 1 das Stabelement 20 noch nicht in einen Bereich 16 zwischen die Klauen 11a und 11b des Klauenelementes 10 eingeführt worden ist. Wie aus der Darstellung gemäß Fig. 2 zu erkennen ist, die das Stabelement 20 teilweise in den Bereich 16 zwischen den Klauen 11a, 11b des Klauenelementes 10 eingeführt zeigt, ist an dem Stabelement 20 ein erster Anschlag 21 und (auch erkennbar aus Fig. 1) ein zweiter Anschlag 22 ausgebildet, wobei der zweite Anschlag 22 einem entsprechenden Anschlagbereich 12 des Klauenelementes 10 gegenüberliegt und mit diesem in Kontakt gebracht werden kann.

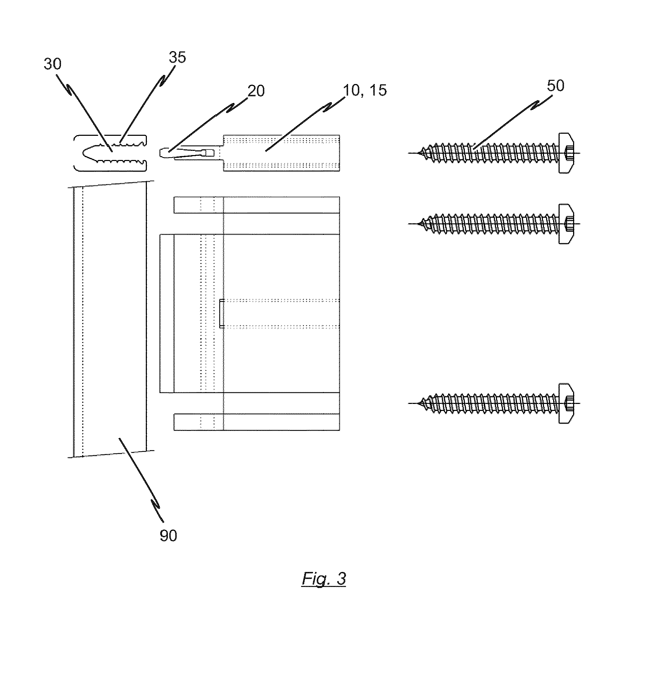

Aus der schematischen Darstellung gemäß Fig. 3, die die Befestigungsvorrichtung aus den Figuren 1 und 2 gemäß dem ersten Ausführungsbeispiel gegenüber einem Verankerungselement 30, im ersten Ausführungsbeispiel einem Verankerungskanal einer Vorhangfassadenwand 90 zeigt, ist zu erkennen, dass die Befestigungsvorrichtung, bei welcher in das Klauenelement 10, d. h. zwischen die Klauen 11a, 11b, teilweise das Stabelement 20 in den Bereich 16 eingebracht worden ist, insgesamt mit diesem vorstehenden Bereich in das Verankerungselement 30 eingeführt wird und mit diesem einen Verzahnungskontakt herstellt, wie im Folgenden noch beschrieben werden wird. Zu diesem Zweck weist das Verankerungselement 30, also der Verankerungskanal, eine entsprechende Verzahnung 35, hier in Form eines Schraubgewindes auf.

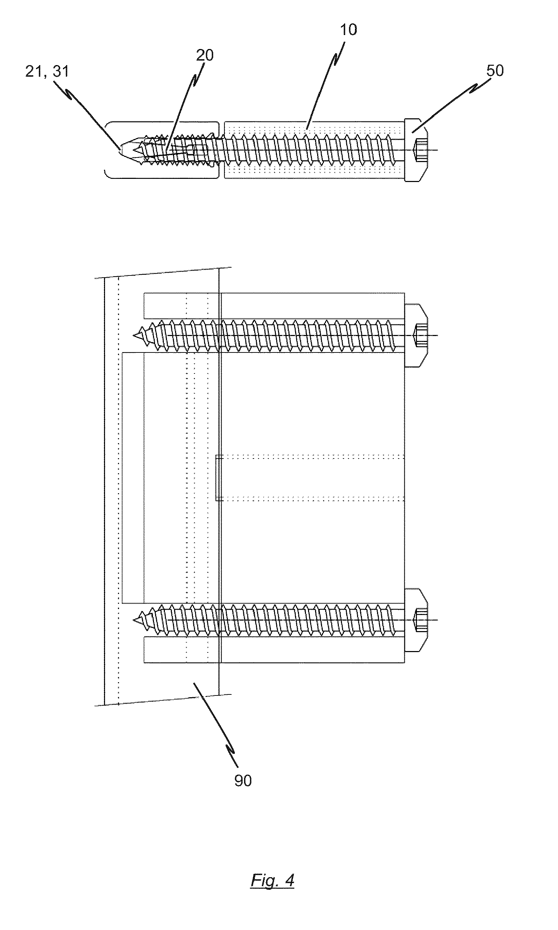

Wie aus der Darstellung gemäß Fig. 4 zu erkennen ist, dient eine Befestigungsschraube 50, welche in einen Führungskanal 15 des Klauenelementes 10 eingeführt ist und von diesem in Richtung des Stabelementes geführt wird, dem Herstellen eines Anpressdruckes zwischen der Befestigungsvorrichtung und dem Verankerungselement 30, indem sie in das Schraubgewinde 35 des Verankerungselementes 30 durch eine Schraubbewegung eingebracht wird.

Hierdurch erfolgt ein Einpressvorgang dahingehend, dass der erste Anschlag 21 des Stabelementes mit einem Wandbereich 31 des Verankerungselementes 30 in Berührung gebraucht wird und gleichzeitig (in Fig. 4 nicht dargestellt) auch der zweite Anschlag 22 des Stabelementes 20 in Richtung auf den ersten Anschlag 21 hinzu gestaucht wird, sodass das Stabelement 20 einen Radialdruck auf die Klauen 11a, 11b des Klauenelementes 10 ausübt und diese hierdurch in das Verankerungselement 30 einpresst, wodurch eine sichere Verbindung zwischen dem Klauenelement 10 der Befestigungsvorrichtung und dem Verankerungselement 30 an der Vorhangfassadenwand 90 hergestellt wird. Gleichzeitig ist durch das Stabelement 20 die mechanische Integrität der gesamten Befestigungsvorrichtung verbessert.

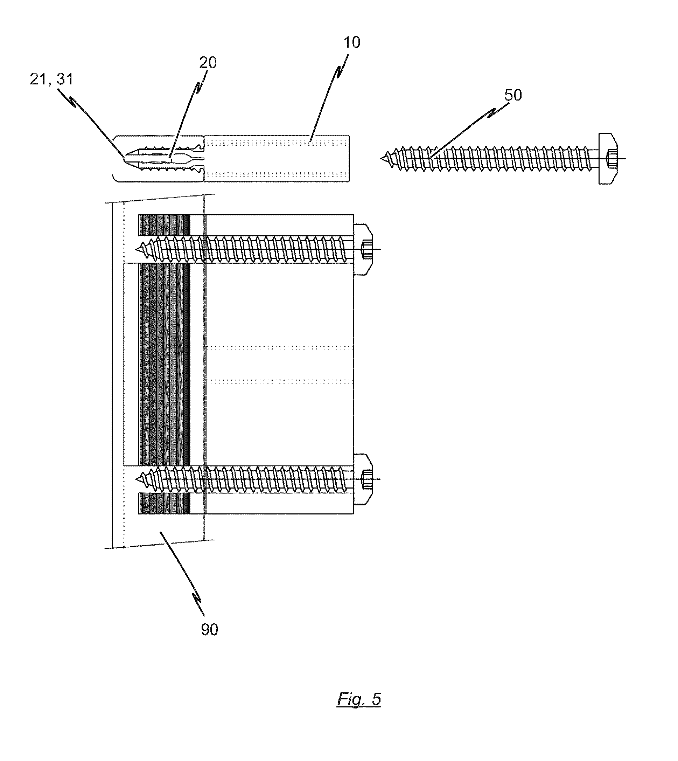

Die Darstellung gemäß Fig. 5 zeigt ein zweites Ausführungsbeispiel einer erfindungsgemäßen Befestigungsvorrichtung mit einem Klauenelement 10 und einem gegenüber dem ersten Ausführungsbeispiel aus den Figuren 1 bis 4 andersartig geformten Stabelement 20.

In der Darstellung gemäß Fig. 5 ist die Befestigungsvorrichtung in das Verankerungselement 30 eingebracht, und eine Befestigungsschraube 50 dient in dem nachfolgenden Einpressvorgang zum Herstellen des notwendigen Anpressdruckes.

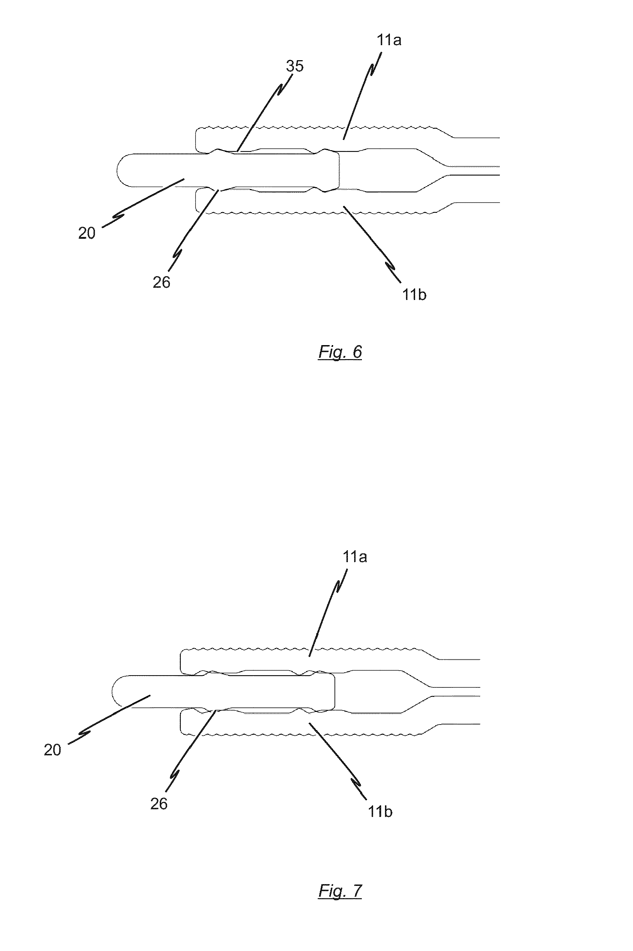

Fig. 6 zeigt (zur besseren Veranschaulichung ohne das Verankerungselement 30) die Befestigungsvorrichtung gemäß dem zweiten Ausführungsbeispiel aus Fig. 5 vor einem beginnenden Einpressvorgang. Eine Ausbuchtung 26 in dem Stabelement 20 liegt in diesem Fall vor einer entsprechenden Verzahnung 35 der Klauen 11a, 11b des Klauenelementes 10.

In Fig. 7 ist eine Verschiebung des Klauenelementes 10 relativ zu dem Stabelement 20 gezeigt, wie sie nach dem Beginn eines Einpressvorganges auftritt. Der Einfachheit halber und zur Verdeutlichung ist die durch die Verschiebung der Ausbuchtung 26 des Stabelementes 20 gegen die Verzahnung 35 der Klauen 11a, 11b des Klauenelementes 10 ausgelöste radiale Expansion der Klauen 11a, 11b in Fig. 7 nicht gezeigt.

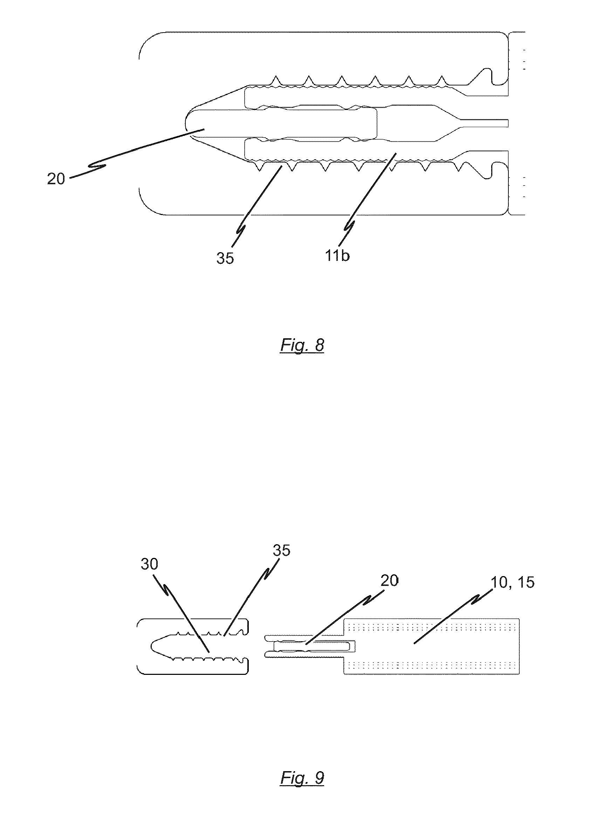

Wie aus Fig. 8 ersichtlich ist, die eine Darstellung gemäß Fig. 7 mit dem dazugehörigen Verankerungselement 30 zeigt, erfolgt durch eine derartige spezielle Formgebung des Stabelementes 20 und der Klauen 11a, 11b des Klauenelementes 10 eine sichere Verzahnung, d. h. Verankerung der Befestigungsvorrichtung in dem Verankerungselement 30.

In Fig. 9 sind die einzelnen Teile der Befestigungsvorrichtung gemäß dem zweiten Ausführungsbeispiel nochmals relativ zu einem Verankerungselement 30 vor einem Einpressvorgang gezeigt.

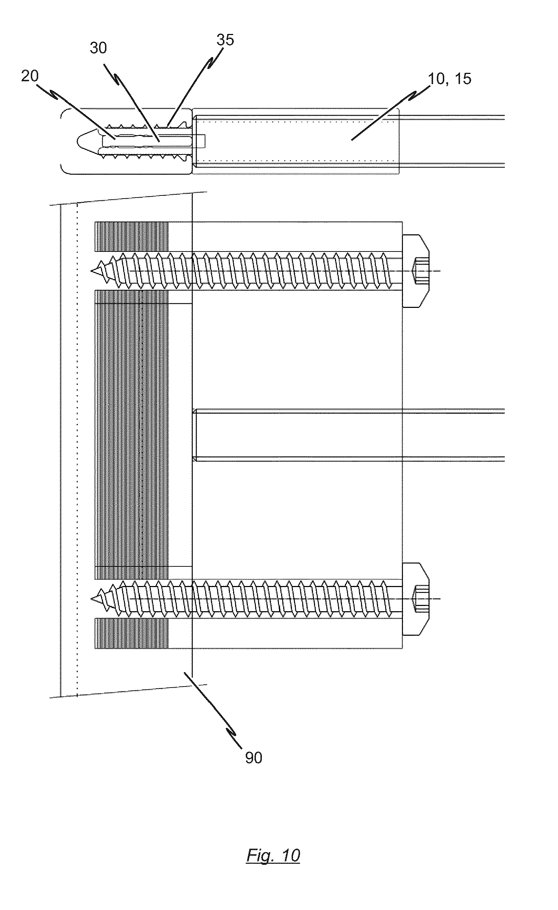

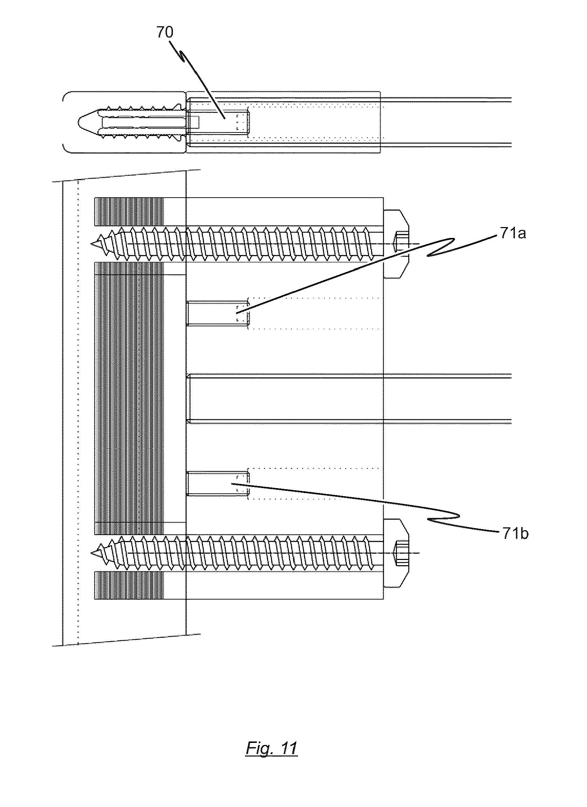

Wie aus der Darstellung gemäß Fig. 10 zu erkennen ist, ist auch bei einer Befestigungsvorrichtung gemäß dem zweiten Ausführungsbeispiel eine Verankerung der Befestigungsvorrichtung in einem Verankerungselement 30, das an einer Vorhangfassadenwand 90 angeordnet ist, ein sicherer mechanischer Halt gegeben. Wie in Fig. 11 gezeigt, können zum Erhöhen des Anpressdruckes der Befestigungsvorrichtung an die Vorhangfassadenwand 90 zusätzliche Anpressschrauben 71a, 71b zum Einsatz kommen, um die Tragfähigkeit der Befestigungsvorrichtung an der Vorhangfassadenwand weiter zu erhöhen.

### Bezugszeichenliste

- 10: Klauenelement
- 11a, 11b: Klauen des Klauenelementes
- 12: Wandbereich des Klauenelementes
- 15: Führungskanal
- 16: Bereich zwischen den Klauen
- 20: Stabelement
- 21: erster Anschlag des Stabelementes
- 22: zweiter Anschlag des Stabelementes
- 26: Ausbuchtung
- 30: Verankerungselement
- 31: Wandbereich des Verankerungselementes
- 35: Verzahnung
- 50: Befestigungsschraube
- 71a, 71b: Andrückschraube
- 90: Vorhangfassadenwand

## Patentansprüche

1. Befestigungsvorrichtung für eine Vorhangfassadenwand (90), insbesondere für eine Pfosten-Riegel-Profilanordnung, wobei die Befestigungsvorrichtung dazu ausgelegt ist, mit einem Verankerungselement (30), vorzugsweise mit einem an der Vorhangfassadenwand (90) angeordneten Verankerungskanal, in Einriff gebracht zu werden, **dadurch gekennzeichnet, dass** die Befestigungsvorrichtung ein Stabelement (20) und ein Klauenelement (10) aufweist, wobei das Stabelement (20) zumindest teilweise in das Klauenelement (10) eingeführt oder einführbar ist, wobei die Befestigungsvorrichtung zum Ineingriffbringen mit dem Verankerungselement (30) zumindest teilweise in einem Bereich in das Verankerungselement (30) einführbar ist, in welchem das Stabelement (20) in das Klauenelement (10) eingeführt bzw. einführbar ist, und wobei das Stabelement (20) dazu ausgelegt ist, bei den Ineingriffbringen der Befestigungsvorrichtung mindestens eine Klaue (11a, 11b) des Klauenelementes (10) in das Verankerungselement (30), insbesondere in den Verankerungskanal, einzupressen.

2. Befestigungsvorrichtung nach Anspruch 1, wobei die Befestigungsvorrichtung einen Führungskanal (15) für Befestigungsschraube aufweist.

3. Befestigungsvorrichtung nach Anspruch 1 oder 2, wobei das Stabelement (20) und/oder das Klauenelement (10) Extrusionsteile sind.

4. Befestigungsvorrichtung nach einem der vorhergehenden Ansprüche, wobei das Einpressen bezogen auf den Verankerungskanal (30) in Radialrichtung erfolgt.

5. Befestigungsvorrichtung nach einem der vorhergehenden Ansprüche, wobei mindestens eine Klaue (11a, 11b) des Klauenelementes (10) dazu ausgelegt ist, in Radialrichtung zu expandieren.

6. Befestigungsvorrichtung nach Anspruch 5, wobei das Stabelement (20) einen ersten Anschlag (21) und einen zweiten Anschlag (22) aufweist, und wobei das Stabelement (20) dazu ausgelegt ist, während des Ineingriffbringens derart durch Verschieben der Anschläge (21, 22) zueinander in Axialrichtung gestaucht zu werden, dass die mindestens eine Klaue (11a, 11b) des Klauenelementes (10) expandiert.
